# EUROPEAN PATENT APPLICATION

(11) **EP 4 478 757 A1**
(43) Date of publication of application: **18.12.2024**
(21) Application number: 22925279.6
(22) Date of filing: 08.02.2022
(51) Int. Cl.: H04W 8/24, H04L 41/0893, H04W 28/16, H04W 48/16

(54) **CAPABILITY INDICATION METHOD AND APPARATUS, AND CAPABILITY DETERMINATION METHOD AND APPARATUS**

(71) Applicant: Beijing Xiaomi Mobile Software Co., Ltd., Beijing 100085 (CN)
(72) Inventor: LIU, Xiaofei, Beijing 100085 (CN)
(74) Representative: Stöckeler, Ferdinand
(86) International application number: PCT/CN2022/075541
(87) International publication number: WO 2023/150914

(57) **Abstract**

The present disclosure relates to a capability indication method and apparatus, and a capability determination method and apparatus. The capability indication method comprises: sending capability indication information to a network-side device, wherein the capability indication information is used for indicating whether a terminal supports a slice group. According to the present disclosure, the terminal can send the capability indication information to the network-side device, and the network-side device is notified, by means of the capability indication information, of whether the terminal supports the slice group, such that the network-side device can determine, by taking the capability indication information of the terminal as auxiliary information, the form of slice information indicated to the terminal, thereby ensuring that the terminal can accurately identify the slice information and then correctly execute an action to be subsequently executed according to the slice information.

## Description

### TECHNICAL FIELD

The present disclosure relates to the field of communication technology, particularly to a method and an apparatus for capability indication, a method and an apparatus for capability determination, a communication device, and a computer-readable storage medium.

### BACKGROUND

A network slice may provide a complete end-to-end virtual network for a specific user. By dividing network resources into a plurality of network slices, 5G network slices may provide differentiated services for users with different service requirements (such as latency, reliability, capacity, isolation and other functions).

The operator network will not only be able to serve information consumption services characterized with "best effort transmission" as a communication demand, but also meet production control services characterized with "deterministic transmission" as a communication demand. That is, logically or physically isolated network resources will be allocated to the services with very different communication demands.

The network device may configure slice information for a terminal so that the terminal may perform some operations (such as a cell reselection) based on the configured slice information. The slice information configured by the network device for the terminal mainly includes two forms, one form is a single slice, and the other form is a slice group.

### SUMMARY

In view of this, embodiments of the disclosure propose a method and an apparatus for capability indication, a method and an apparatus for capability determination, a communication device, and a computer-readable storage medium, to solve the technical problem in the related art.

According to a first aspect of the embodiments of the disclosure, a method for capability indication is provided, performed by a terminal. The method includes: sending capability indication information to a network device, in which the capability indication information indicates whether the terminal supports a slice group.

According to a second aspect of the embodiments of the disclosure, a method for capability determination is provided, performed by a network device. The method includes: receiving capability indication information from a terminal; and determining whether the terminal supports a slice group based on the capability indication information.

According to a third aspect of the embodiments of the disclosure, an apparatus for capability indication is provided. The apparatus includes a sending module, configured to send capability indication information to a network device, in which the capability indication information indicates whether the terminal supports a slice group.

According to a fourth aspect of the embodiments of the disclosure, an apparatus for capability indication is provided. The apparatus includes a receiving module, configured to receive capability indication information from a terminal; and a processing module, configured to determine whether the terminal supports a slice group based on the capability indication information.

According to a fifth aspect of the embodiments of the disclosure, a communication device is provided, including: a processor; and a memory for storing a computer program. When the computer program is executed by the processor, the above-mentioned method for capability indication is implemented.

According to a sixth aspect of the embodiments of the disclosure, a communication device is provided, including: a processor; and a memory for storing a computer program. When the computer program is executed by the processor, the above-mentioned method for capability determination is implemented.

According to a seventh aspect of the embodiments of the disclosure, a computer-readable storage medium for storing a computer program is provided. When the computer program is executed by a processor, steps in the above-mentioned method for capability indication are implemented.

According to an eighth aspect of an embodiment of the present disclosure, a computer-readable storage medium for storing a computer program is provided. When the computer program is executed by a processor, steps in the above-mentioned method for capability determination are implemented.

According to the embodiments of the disclosure, the terminal may send capability indication information to the network device, and inform the network device of whether the terminal supports a slice group via the capability indication information, so that the network device may take the capability indication information from the terminal as auxiliary information to determine a form of slice information indicated to the terminal, so as to ensure that the terminal may accurately identify the slice information, and correctly perform subsequent actions according to the slice information.

### BRIEF DESCRIPTION OF THE DRAWINGS

In order to more clearly illustrate the technical solutions in the embodiments of the disclosure, the drawings required for use in the description of the embodiments may be briefly introduced below. Obviously, the drawings described below are only some embodiments of the disclosure. For those skilled in this art, other drawings may be obtained based on these drawings without creative work.
FIG. 1 is a schematic flowchart illustrating a method for capability indication according to an embodiment of the disclosure.
FIG. 2 is a schematic flowchart illustrating a method for capability determination according to an embodiment of the disclosure.
FIG. 3 is a schematic block diagram illustrating an apparatus for capability indication according to an embodiment of the disclosure.
FIG. 4 is a schematic block diagram illustrating an apparatus for capability determination according to an embodiment of the disclosure.
FIG. 5 is a schematic block diagram illustrating a device for capability determination according to an embodiment of the disclosure.
FIG. 6 is a schematic block diagram illustrating a device for capability indication according to an embodiment of the disclosure.

### DETAILED DESCRIPTION

The technical solutions in the embodiments of the disclosure will be clearly and completely described below in conjunction with the drawings in the embodiments of the disclosure. Obviously, the described embodiments are only part of the embodiments of the disclosure, rather than all the embodiments. Based on the embodiments in the disclosure, all other embodiments obtained by those skilled in the art without making any creative works should fall within the protection scope of the disclosure.

The terms used in the embodiments of the disclosure are only for the purpose of describing specific embodiments and are not intended to limit the embodiments of the disclosure. As used in the disclosure and the appended claims, the singular forms "a/an", "said," and "the" are intended to include the plural forms as well, unless the context clearly indicates otherwise. It should also be understood that the term "and/or" as used herein refers to and encompasses any and all possible combinations of one or more of the associated listed items.

It should be understood that although the terms first, second, third, etc. may be used to describe various information in the embodiments of the disclosure, the information should not be limited to these terms. These terms are used only to distinguish information of the same type from one another. For example, without departing from the scope of the embodiments of the disclosure, first information may also be referred to as second information, and similarly, second information may also be referred to as first information. The word "if" as used herein may be interpreted as "upon" or "when" or "in response to determining..." depending on the context.

For the purpose of conciseness and ease of understanding, the terms "greater than" or "less than", "higher than" or "lower than" are used herein to characterize size relationships. However, it may be understood by those skilled in the art that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

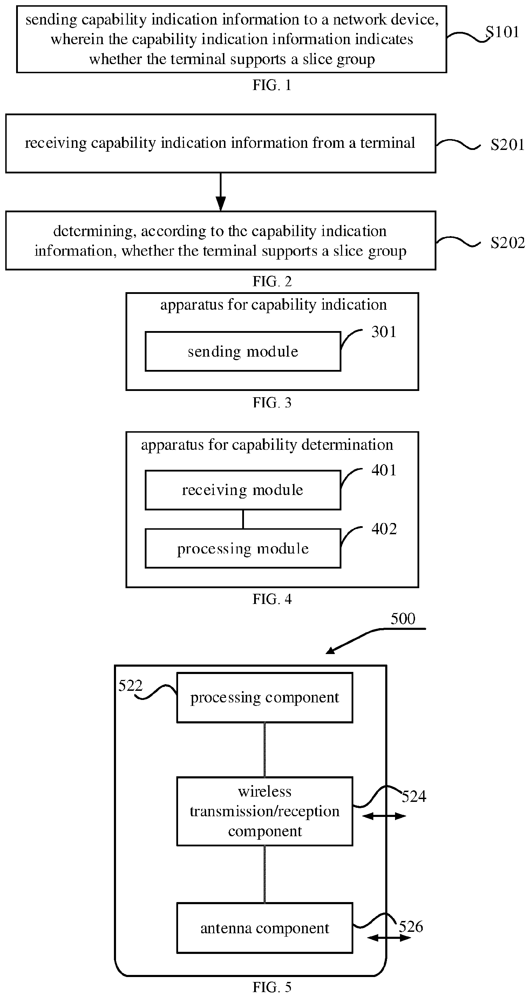

FIG. 1 is a schematic flowchart illustrating a method for capability indication according to an embodiment of the disclosure. The method for capability indication illustrated in the embodiments may be performed by a terminal, and the terminal includes but is not limited to communication devices such as mobile phones, tablet computers, wearable devices, sensors, and Internet of Things devices. The terminal may communicate with a network device, and the network device includes but is not limited to a network device in 4G, 5G, 6G and other communication systems, such as a base station, a core network device and other communication devices.

As shown in FIG. 1, the method for capability indication may include the following step at 5101.

At S101, capability indication information is sent to a network device, in which the capability indication information indicates whether the terminal supports a slice group.

In an embodiment, the slice information configured by the network device for the terminal mainly includes two forms, one form is a single slice, and the other form is a slice group.

Due to different capabilities of different terminals, some terminals support a slice group (and also support a single slice), while some terminals only support the single slice but not the slice group. If the network device sends slice information to the terminal without considering the capability of the terminal, it may cause the terminal to be unable to accurately identify the slice information.

For example, the terminal A supports the slice group, which includes supporting reception of slice information in the form of the slice group. The terminal B only supports the single slice, which includes supporting reception of slice information in the form of the single slice. If the slice information configured by the network device for the terminal B is slice information in the form of the slice group, then terminal B will not be able to accurately identify the slice information sent by the network device, which will cause errors in subsequent operations performed by the terminal B based on the slice information.

According to the embodiments of the disclosure, the terminal may send capability indication information to the network device, and inform the network device of whether the terminal supports a slice group via the capability indication information, so that the network device may take the capability indication information from the terminal as auxiliary information to determine a form of slice information indicated to the terminal, so as to ensure that the terminal may accurately identify the slice information, and correctly perform subsequent actions according to the slice information.

For example, for the above terminal B, the slice information sent by the network device is in the form of the single slice, so as to ensure that the terminal B may accurately identify the received slice information, and correctly perform subsequent actions according to the identified slice information. Since the terminal A supports both the slice group and the single slice, the slice information sent by the network device may be in the form of the single slice or the slice group.

It should be noted that the capability indication information sent by the terminal to the network device is only auxiliary information for the network device, that is, the capability indication information cannot determine actions of the network device, but is only used as a reference for the network device to perform the actions.

In other words, for the above terminal B, the network device takes into account the capability indication information and sends the slice information to the terminal B in the form of the single slice. If the network device may also not take into account the capability indication information, the slice information sent to the terminal B may be in the form of the single slice or the slice group.

In an embodiment, the terminal may perform various actions based on the slice information, including but not limited to a cell reselection (for example, in an idle state or an inactive state), a random access, etc. Accordingly, the slice information sent by the network device to the terminal may also include slice information related to the cell reselection and slice information related to the random access.

The capability indication information of the disclosure is exemplarily described below from the two aspects of cell reselection and random access.

In an embodiment, there are mainly two ways for the network device to send slice information to the terminal, in which one way is broadcasting, such as carrying the slice information in a system information block (SIB), and the other way is unicasting, such as carrying the slice information in a radio resource control (RRC) message, further carrying the slice information in an RRC Release message.

When the slice information is carried in the RRC Release message, the network device has established a communication connection with the terminal before sending the RRC Release message to the terminal. Therefore, the network device may receive the capability indication information reported by the terminal, and determine whether the terminal receives the slice information in the form of supporting the slice group.

For example, the network device needs to send slice information for cell reselection to the terminal, such as a cell frequency priority associated with a slice. When the network device determines that the terminal supports a slice group according to the capability indication information, the network device may select to send a cell frequency priority associated with the slice group to the terminal. The capability indication information may also indicate a single slice supported by the terminal, and the network device may select to send a cell frequency priority associated with the single slice to the terminal. The capability indication information may also indicate that neither the slice group nor the single slice is supported by the terminal, and the network device may select to send a cell frequency priority in a legacy form to the terminal, that is, the cell frequency priority is not associated with the slice.

In an embodiment, the capability indication information reported by the terminal to the network device indicates whether the terminal supports the slice group, in which there are mainly two forms of capability indication information. One form is that the capability indication information directly indicates whether the terminal supports the slice group, and the other form is that the capability indication information indicates indirect information, for example, it does not directly indicate whether the terminal supports the slice group, but indicates whether the terminal supports performing some operations based on the slice group information. The following embodiments mainly provide examples for describing the two forms of capability indication information.

In an embodiment, the capability indication information includes first indication information, and the first indication information indicates whether the terminal supports a cell reselection based on slice group information.

In this embodiment, the indication information indicates whether the terminal supports the slice group, which may be that the first indication information is used to indicate whether the terminal supports the cell reselection based on the slice group information.

When it is determined that the terminal supports the cell reselection based on the slice group information, the network device may select to send information to the cell reselection related to the terminal in the form of the slice group. When it is determined that the terminal does not support the cell reselection based on the slice group information, the network device may select to send information related to the cell reselection to the terminal in the form of the single slice. The information related to the cell reselection includes but is not limited to a cell frequency priority.

For example, the first indication information may be shown in the form of the following table 1:

**Table 1**

| Definitions for parameters | Per | M | FDD-TDD DIFF | FR1-FR2 DIFF |
|---|---|---|---|---|
| ***slicegroupInfoforCellReselection-r17*** | UE | No | No | No |
| Indicates whether the UE supports slicegroupInformation on RRC release for slice based cell reselection in RRC_IDLE and RRC INACTIVE as defined in TS 38.304 [21]. | | | | |

The first indication information may include Definitions for parameters, each object (Per) to which each parameter is targeted, whether it is mandatory (M for short), whether Frequency-division Duplex (FDD) and Time-division Duplex (TDD) are different (i.e., FDD-TDD DIFF), and whether FR1 frequency band and FR2 frequency band are different (i.e., FR1-FR2 DIFF).

For example, each object to which each parameter is targeted is a user equipment (UE);
whether it is mandatory: No;
whether FDD and TDD are different: No;
whether FR1 frequency band and FR2 frequency band are different: No.

These content items may be the same as or different from those in other indication information in the subsequent embodiments. The following embodiments are mainly described in a situation where they are the same, and the differences in the content item "Definitions for parameters" are specifically described.

The Definitions for parameters in the first indication information may include a name and specific indication content. For example, the name may be slicegroupInfoforCellReselection-r17, that is, slice group information for cell reselection in R17, and its indication content may be:
Indicates whether the UE supports slicegroupInformation on RRC release for slice based cell reselection in RRC _IDLE and RRC INACTIVE);
That is, the first indication information indicates whether the UE in an RRC idle state and an RRC inactive state supports the cell reselection based on the slice group information in the RRC Release message.

The RRC idle state and RRC inactive state in all embodiments of the disclosure may be defined as in TS 38.304[21].

It should be noted that in all embodiments of the disclosure, sending information to the terminal in the form of the slice group includes sending information associated with an identifier (ID) of a slice group to the terminal, and sending information to the terminal in the form of the single slice includes sending information associated with an ID of a single slice to the terminal, for example, information associated with Single-Network slice selection assistance information (S-NSSAI).

In an embodiment, the capability indication information includes an eleventh indication information, and the eleventh indication information indicates whether the terminal supports a cell reselection based on slice group information in the RRC Release message.

In an embodiment, the capability indication information includes second indication information, and the second indication information indicates whether the terminal supports a cell reselection based on single slice information.

In this embodiment, the indication information indicates whether the terminal supports the slice group, which may be that the second indication information is used to indicate whether the terminal supports the cell reselection based on the single slice information. It may be agreed that when the capability indication information indicates that the cell reselection based on the single slice information is supported, the cell reselection based on the slice group information is not supported by default; and when the capability indication information indicates that the cell reselection based on the single slice information is not supported, the cell reselection based on the slice group information is supported by default.

When it is determined that the terminal supports the cell reselection based on the single slice information, the network device may select to send information related to the cell reselection to the terminal in the form of the single slice. When it is determined that the terminal does not support cell reselection based on a single slice information, the network device may select to send information related to the cell reselection to the terminal in the form of the slice group. The information related to the cell reselection includes but is not limited to the cell frequency priority.

For example, the second indication information may be shown in the form of the following Table 2.

**Table 2**

| Definitions for parameters | Per | M | FDD-TDD DIFF | FR1-FR2 DIFF |
|---|---|---|---|---|
| ***S-NSSAIInfoforCellReselection-r17*** | UE | No | No | No |
| Indicates whether the UE supports S-NSSAIInformation on RRC release for slice based cell reselection in RRC _IDLE and RRC INACTIVE as defined in TS 38.304 [21]. | | | | |

The second indication information may include Definitions for parameters, Per, M, FDD-TDD DIFF, FR1-FR2 DIFF, etc.

The Definitions for parameters in the second indication information may include a name and specific indication content. For example, the name may be S-NSSAIInfoforCellReselection-r17, that is, single slice information for cell reselection in R17 (a single slice is represented by S-NSSAI), and the indication content may be:
Indicates whether the UE supports S-NSSAIInformation on RRC release for slice based cell reselection in RRC_IDLE and RRC INACTIVE;
That is, the second indication information indicates whether the UE in the RRC idle state and the RRC inactive state supports the cell reselection based on the single slice information in the RRC Release message.

In an embodiment, the capability indication information includes twelfth indication information, and the twelfth indication information indicates whether the terminal supports the cell reselection based on the single slice information in the RRC Release message.

In an embodiment, the capability indication information includes third indication information, and the third indication information indicates whether the terminal supports slice group information.

In this embodiment, the indication information indicates whether the terminal supports the slice group, which may be that the third indication information is used to directly indicate whether the terminal supports the slice group information.

When it is determined that the terminal supports the slice group information, the network device may select to send slice information to the terminal in the form of the slice group. When it is determined that the terminal does not support the slice group information, the network device may select to send slice information to the terminal in the form of the single slice.

For example, the third indication information may be shown in the form of the following Table 3.

**Table 3**

| Definitions for parameters | Per | M | FDD-TDD DIFF | FR1-FR2 DIFF |
|---|---|---|---|---|
| ***slicegroup*** | UE | No | No | No |
| Indicates whether the UE supports slicegroupInformation. | | | | |

The third indication information may include Definitions for parameters, Per, M, FDD-TDD DIFF, FR1-FR2 DIFF, etc.

The Definitions for parameters in the third indication information may include a name and specific indication content. For example, the name may be slicegroup, i.e., slice group, and the indication content may be:
Indicates whether the UE supports slicegroupInformation;
That is, the third indication information indicates whether the UE supports the slice group information.

In an embodiment, the capability indication information includes fourth indication information, and the fourth indication information indicates whether the terminal supports single slice information.

In this embodiment, the indication information indicates whether the terminal supports slice group, which may be that the fourth indication information is used to directly indicate whether the terminal supports the single slice information. It may be agreed that when the capability indication information indicates that the single slice information is supported, the slice group information is not supported by default; and when the capability indication information indicates that the single slice information is not supported, the slice group information is supported by default.

When it is determined that the terminal supports the single slice information, the network device may select to send slice information to the terminal in the form of the single slice. When it is determined that the terminal does not support the single slice information, the network device may select to send slice information to the terminal in the form of the slice group.

For example, the fourth indication information may be shown in the form of the following Table 4.

**Table 4**

| Definitions for parameters | Per | M | FDD-TDD DIFF | FR1-FR2 DIFF |
|---|---|---|---|---|
| ***S-NSSAIInfo-r17*** | UE | No | No | No |
| Indicates whether the UE supports S-NSSAIInformation. | | | | |

The fourth indication information may include Definitions for parameters, Per, M, FDD-TDD DIFF, FR1-FR2 DIFF, etc.

The Definitions for parameters in the fourth indication information may include a name and specific indication content. For example, the name may be S-NSSAIInfo-r17, that is, single slice information in R17 (a single slice is represented by S-NSSAI), and the indication content may be:
Indicates whether the UE supports S-NSSAIInformation;
That is, the fourth indication information indicates whether the UE supports the single slice information.

In an embodiment, the capability indication information includes slice support indication information, and the slice support indication information indicates whether the terminal supports a cell reselection based on slice information.

Since the slice support indication information can only indicate a support state of the terminal for the slice information, but cannot specifically indicate whether the slice group or single slice is supported, in an embodiment, based on the fact that the indication information includes the slice support indication information, the indication information may be set to include at least one of the above first indication information, second indication information, third indication information and fourth indication information so as to further indicate whether the terminal specifically supports the slice group or the single slice, thus ensuring the accuracy of the indication.

Taking as an example that the network device sends information related to the cell reselection to the terminal:
In a case where the slice support indication information indicates that the terminal supports the slice information, if the network device determines that the terminal supports the slice group information, the information related to the cell reselection sent to the terminal may include a slice group ID and a dedicated frequency priority associated with the slice group ID;
In the case where the slice support indication information indicates that the terminal supports slice information, if the network device determines that the terminal does not support the slice group information, the information related to the cell reselection sent to the terminal may include a single slice ID and a dedicated frequency priority associated with the single slice ID;
In a case where the slice support indication information indicates that the terminal does not support slice information, if the network device determines that the terminal supports the slice group information, the frequency priority may be carried in the SIB and sent to the terminal;
In the case where the slice support indication information indicates that the terminal does not support slice information, if the network device determines that the terminal does not support the slice group information, the information related to the cell reselection sent to the terminal may include sending a legacy dedicated frequency priority.

In the case where the slice support indication information indicates that the terminal supports slice information, if the network device has not determined whether the terminal supports the slice group information, it may be determined by default that the terminal supports the slice group information, and the information related to the cell reselection sent to the terminal may include a slice group ID and a dedicated frequency priority associated with the slice group ID, or it may be determined by default that the terminal supports the single slice information, and the information related to the cell reselection sent to the terminal may include a single slice ID and a dedicated frequency priority associated with the single slice ID.

In an embodiment, the indication information may not include the slice support indication information, but only include the first indication information or the second indication information. Since the first indication information or the second indication information has already indicated the support state for the slice group information, there is no need to indicate both the support state for the slice information and the support state for the slice group information respectively through two levels of indication information, which helps to reduce the complexity of the indication.

Taking as an example that the network device sends information related to the cell reselection to the terminal:
When the network device determines, according to the first indication information, that the terminal supports the slice group information, the information related to the cell reselection sent to the terminal may include a slice group ID and a dedicated frequency priority associated with the slice group ID;
When the network device determines, according to the first indication information, that the terminal does not support the slice group information, the information related to the cell reselection sent to the terminal may include a legacy dedicated frequency priority, or the information related to the cell reselection sent to the terminal may include a single slice ID and a dedicated frequency priority associated with the single slice ID;
When the network device determines, according to the second indication information, that the terminal supports the slice group information, the information related to the cell reselection sent to the terminal may include a single slice ID and a dedicated frequency priority associated with the single slice ID;
When the network device determines that the terminal does not support the slice group information based on the second indication information, the information related to the cell reselection sent to the terminal may include a legacy dedicated frequency priority, or the information related to the cell reselection sent to the terminal may include a single slice ID and a dedicated frequency priority associated with the single slice ID.

In an embodiment, the capability indication information includes fifth indication information, and the fifth indication information indicates whether the terminal supports a random access channel (RACH) based on slice group information.

In this embodiment, the indication information indicates whether the terminal supports slice group, which may be that the fifth indication information is used to indicate whether the terminal supports the RACH based on the slice group information.

When it is determined that the terminal supports the RACH based on the slice group information, the network device may select to send information related to the RACH to the terminal in the form of the slice group. When it is determined that the terminal does not support the RACH based on the slice group information, the network device may select to send information related to the RACH to the terminal in the form of the single slice. The information related to the RACH includes but is not limited to RACH resource partition and RA prioritization parameters.

For example, the fifth indication information may be shown in the form of the following Table 5.

**Table 5**

| Definitions for parameters | Per | M | FDD-TDD DIFF | FR1-FR2 DIFF |
|---|---|---|---|---|
| ***slicegroupInfoforRACH-r17*** | UE | No | No | No |
| Indicates whether the UE supports slicegroupInformation for slice based random access channel as defined in TS 38.321 [21]. | | | | |

The fifth indication information may include Definitions for parameters, Per, M, FDD-TDD DIFF, FR1-FR2 DIFF, etc.

The Definitions for parameters in the fifth indication information may include a name and specific indication content. For example, the name may be slicegroupInfoforRACH-r17, that is, slice group information for the RACH in R17, and the indication content may be:

Indicates whether the UE supports slicegroupInformation for slice based RACH;

That is, it indicates whether the UE supports the RACH based on the slice group information.

The RACH in all embodiments of the disclosure may be defined as in TS 38.321[21].

In an embodiment, the capability indication information includes sixth indication information, and the sixth indication information indicates whether the terminal supports RACH resource partition based on slice group information.

In this embodiment, the indication information indicates whether the terminal supports the slice group, which may be that the sixth indication information is used to indicate whether the terminal supports the RACH resource partition based on the slice group information.

When it is determined that the terminal supports the RACH resource partition based on the slice group information, the network device may select to configure the RACH resource partition to the terminal in the form of the slice group. When it is determined that the terminal does not support the RACH resource partition based on the slice group information, the network device may select to configure the RACH resource partition to the terminal in the form of the single slice.

For example, the sixth indication information may be shown in the form of the following Table 6.

**Table 6**

| Definitions for parameters | Per | M | FDD-TDD DIFF | FR1-FR2 DIFF |
|---|---|---|---|---|
| ***slicegroupInfoforRACHpartition-r17*** | UE | No | No | No |
| Indicates whether the UE supports slicegroupInformation for slice based RACH resource partition as defined in TS 38.321 [21]. | | | | |

The sixth indication information may include Definitions for parameters, Per, M, FDD-TDD DIFF, FR1-FR2 DIFF, etc.

The Definitions for parameters in the sixth indication information may include a name and specific indication content. For example, the name may be slicegroupInfoforRACHpartition-r17, that is, slice group information for the RACH resource partition in R17, and the indication content may be:
Indicates whether the UE supports slicegroupInformation for slice based the RACH resource partition;
That is, the sixth indication information indicates whether the UE supports the RACH resource partition based on the slice group information.

The RACH resource partition in all embodiments of the disclosure may be as defined in TS 38.321[21].

In an embodiment, the capability indication information includes seventh indication information, and the seventh indication information indicates whether the terminal supports RACH prioritization parameters based on slice group information.

In this embodiment, the indication information indicates whether the terminal supports the slice group, which may be that the seventh indication information is used to indicate whether the terminal supports the RACH prioritization parameters based on the slice group information.

When it is determined that the terminal supports the RACH prioritization parameters based on the slice group information, the network device may select to configure the RACH prioritization parameters to the terminal in the form of the slice group. When it is determined that the terminal does not support the RACH prioritization parameters based on the slice group information, the network device may select to configure the RACH prioritization parameters to the terminal in the form of the single slice.

For example, the seventh indication information may be shown in the form of the following Table 7.

**Table 7**

| Definitions for parameters | Per | M | FDD-TDD DIFF | FR1-FR2 DIFF |
|---|---|---|---|---|
| ***slicegroupInfoforRAprioritization-r17*** | UE | No | No | No |
| Indicates whether the UE supports slicegroupInformation for slice based RAprioritization parameters as defined in TS 38.321 [21]. | | | | |

The seventh indication information may include Definitions for parameters, Per, M, FDD-TDD DIFF, FR1-FR2 DIFF, etc.

The Definitions for parameters in the seventh indication information may include a name and specific indication content. For example, the name may be slicegroupInfoforRAprioritization-r17, that is, slice group information for RA prioritization in R17, and the indication content may be:
Indicates whether the UE supports slicegroupInformation for slice based RA prioritization;
That is, the seventh indication information indicates whether the UE supports RA prioritization based on slice group information.

Among them, the RA prioritization in all embodiments of the disclosure may be defined as in TS 38.321[21].

In an embodiment, the capability indication information includes eighth indication information, and the eighth indication information indicates whether the terminal supports a RACH based on single slice information.

In this embodiment, the indication information indicates whether the terminal supports the slice group, which may be that the eighth indication information is used to indicate whether the terminal supports the RACH based on the single slice information. It may be agreed that when the capability indication information indicates that the RACH based on the single slice information is supported, the RACH based on the slice group information is not supported by default; and when the capability indication information indicates that the RACH based on the single slice information is not supported, the RACH based on the slice group information is supported by default.

When it is determined that the terminal supports the RACH based on the single slice information, the network device may select to send information related to the RACH to the terminal in the form of the single slice. When it is determined that the terminal does not support RACH based on a single slice information, the network device may select to send information related to the RACH to the terminal in the form of the slice group.

In an embodiment, the capability indication information includes ninth indication information, and the ninth indication information indicates whether the terminal supports a RACH resource partition based on single slice information.

In this embodiment, the indication information indicates whether the terminal supports the slice group, which may be that the ninth indication information is used to indicate whether the terminal supports the RACH resource partition based on the single slice information. It may be agreed that when the capability indication information indicates that the RACH resource partition based on the single slice information is supported, a RACH resource partition based on slice group information is not supported by default; and when the capability indication information indicates that the RACH resource partition based on the single slice information is not supported, the RACH resource partition based on the slice group information is supported by default.

When it is determined that the terminal supports the RACH resource partition based on the single slice information, the network device may select to configure the RACH resource partition to the terminal in the form of the single slice. When it is determined that the terminal does not support the RACH resource partition based on the single slice information, the network device may select to configure the RACH resource partition to the terminal in the form of the slice group.

In an embodiment, the capability indication information includes tenth indication information, and the tenth indication information indicates whether the terminal supports RACH prioritization parameters based on single slice information.

In this embodiment, the indication information indicates whether the terminal supports the slice group, which may be that the tenth indication information is used to indicate whether the terminal supports the RACH prioritization parameters based on the single slice information. It may be agreed that when the capability indication information indicates that the RACH prioritization parameters based on the single slice information are supported, RACH prioritization parameters based on slice group information are not supported by default; and when the capability indication information indicates that the RACH prioritization parameters based on the single slice information are not supported, the RACH prioritization parameters based on the slice group information are supported by default.

When it is determined that the terminal supports the RACH prioritization parameters based on the single slice information, the network device may select to configure the RACH prioritization parameters to the terminal in the form of the single slice. When it is determined that the terminal does not support the RACH prioritization parameters based on the single slice information, the network device may select to configure the RACH prioritization parameters to the terminal in the form of the slice group.

In an embodiment, based on the fact that the indication information includes the above slice support indication information, the indication information may be set to include at least one of the above fifth indication information, sixth indication information, seventh indication information, eighth indication information, ninth indication information, and tenth indication information to further indicate whether the terminal specifically supports the slice group or the single slice, thus ensuring the accuracy of the indication.

Taking an example that the network device sends information related to the RACH to the terminal:
In the case where the slice support indication information indicates that the terminal supports the slice information, if the network device determines that the terminal supports the slice group information, the information related to the RACH sent to the terminal may include a slice group ID and a RACH configuration associated with the slice group ID;
In the case where the slice support indication information indicates that the terminal supports the slice information, if the network device determines that the terminal does not support the slice group information, the information related to the RACH sent to the terminal may include a single slice ID and a RACH configuration associated with the single slice ID;
In the case where the slice support indication information indicates that the terminal does not support the slice information, if the network device determines that the terminal supports the slice group information, the RACH configuration may be carried in the SIB and sent to the terminal;
In the case where the slice support indication information indicates that the terminal does not support the slice information, if the network device determines that the terminal does not support the slice group information, the information related to the RACH sent to the terminal may include sending a legacy RACH configuration.

In the case where the slice support indication information indicates that the terminal supports the slice information, if the network device has not determined whether the terminal supports the slice group information, it may be determined by default that the terminal supports the slice group information, and the information related to the RACH sent to the terminal may include a slice group ID and a RACH configuration associated with the slice group ID, or it may be determined by default that the terminal supports the single slice information, and the information related to the RACH sent to the terminal may include a single slice ID and a RACH configuration associated with the single slice ID.

In an embodiment, the indication information may not include the slice support indication information, but only include the first indication information or the second indication information. Since the first indication information or the second indication information has already indicated the support state for the slice group information, there is no need to indicate both the support state for the slice information and the support state for the slice group information respectively through two levels of indication information, which helps to reduce the complexity of the indication.

Taking as an example that the network device sends information related to the RACH to the terminal:
When the network device determines that the terminal supports the slice group information, the information related to the RACH sent to the terminal may include a slice group ID and a RACH configuration associated with the slice group ID;
When the network device determines that the terminal does not support the slice group information, the information related to the RACH sent to the terminal may include a legacy RACH configuration;
When the network device determines that the terminal supports the slice group information, the information related to the RACH sent to the terminal may include a slice group ID and a RACH configuration associated with a single slice ID;
When the network device determines that the terminal does not support the slice group information, the information related to the RACH sent to the terminal may include a legacy RACH configuration.

In an embodiment, the capability indication information may be carried in an information element (IE) and sent to the network device. For example, the capability indication information may be carried in an existing IE or in a newly added IE.

In an embodiment, when the capability indication information is carried in an existing IE, the existing IE may be UE-NR-Capability;
In an embodiment, when the capability indication information is carried in a newly added IE, the newly added IE may be included in UE-NR-Capability or may exist independently from the UE-NR-Capability.

In an embodiment, when the capability indication information is carried in the newly added IE for sending, there may be no need to distinguish the specific content of the capability indication information, and the capability indication information may be sent through the newly added IE; or the capability indication information may be carried in different newly added IEs for sending according to the specific content of the capability indication information.

In an embodiment, the newly added IE may include one IE, for example, called Slice-Parameters-r17. No matter what the specific content indicated by the capability indication information is, it may be carried in the IE of Slice-Parameters-r17 for sending.

In an embodiment, the newly added IE may include a plurality of IEs, for example, including but not limited to at least one of:
First IE: Slice-Parameters-r17;
Second IE: SliceReselection-Parameters-r17;
Third IE: SliceRACH-Parameters-r17;
Fourth IE: SliceRACHpartition-Parameters-r17; or
Fifth IE: SliceRAprioritization-Parameters-r17.

In an embodiment, the first IE may include the second IE and the third IE, and the third IE may include the fourth IE and the fifth IE.

In an embodiment, the first IE, the second IE, the third IE, the fourth IE and the fifth IE may be in parallel.

In an embodiment, when the capability indication information includes the third indication information or the fourth indication information, the capability indication information may be carried in the first IE; when the capability indication information includes the first indication information, or the second indication information, or the eleventh indication information, or the twelfth indication information, the capability indication information may be carried in the second IE; when the capability indication information includes the fifth indication information or the eighth indication information, the capability indication information may be carried in the fifth IE; when the capability indication information includes the sixth indication information or the ninth indication information, the capability indication information may be carried in the fourth IE; when the capability indication information includes the seventh indication information or the tenth indication information, the capability indication information may be carried in the fifth IE.

It should be noted that the above embodiment is a way of carrying the capability indication information when the newly added IE includes the above five IEs, and when the newly added IE only carries part of the five IEs, if there is an including/being included relationship between the IEs, the way of carrying the capability indication information may be determined based on the including /being included relationship between the IEs.

For example, when the newly added IE includes the first IE, the second IE and the third IE, if the capability indication information includes the third indication information or the fourth indication information, the capability indication information may be carried in the first IE; if the capability indication information includes the first indication information, or the second indication information, or the eleventh indication information, or the twelfth indication information, the capability indication information may be carried in the second IE; if the capability indication information includes the fifth indication information, or the sixth indication information, the seventh indication information, or the eighth indication information, the ninth indication information, or the tenth indication information, the capability indication information may be carried in the third IE.

FIG. 2 is a schematic flow chart illustrating a method for capability determination according to an embodiment of the disclosure. The method for capability determination shown in this embodiment may be performed by a network device, and the network device may communicate with a terminal. The network device includes but is not limited to a base station in a communication system, such as a 4G base station, a 5G base station, and a 6G base station. The terminal includes but is not limited to a mobile phone, a tablet computer, a wearable device, a sensor, an Internet of Things device (such as NB-IoT, MTC, eMTC) and other communication device.

As shown in FIG. 2, the method for capability determination may include the following steps at S201-S202.

At S201, capability indication information is received from a terminal.

At S202, it is determined according to the capability indication information whether the terminal supports a slice group.

In an embodiment, the slice information configured by the network device for the terminal mainly includes two forms, one form is a single slice, and the other form is a slice group.

Due to different capabilities of different terminals, some terminals support a slice group (and also support a single slice), while some terminals only support the single slice but not the slice group. If the network device sends slice information to the terminal without considering the capability of the terminal, it may cause the terminal to be unable to accurately identify the slice information.

For example, the terminal A supports the slice group, which includes supporting reception of slice information in the form of the slice group. The terminal B only supports the single slice, which includes supporting reception of slice information in the form of the single slice. If the slice information configured by the network device for the terminal B is slice information in the form of the slice group, then terminal B will not be able to accurately identify the slice information sent by the network device, which will cause errors in subsequent operations performed by the terminal B based on the slice information.

According to the embodiments of the disclosure, the terminal may send capability indication information to the network device, and inform the network device of whether the terminal supports a slice group via the capability indication information, so that the network device may take the capability indication information from the terminal as auxiliary information to determine a form of slice information indicated to the terminal, so as to ensure that the terminal may accurately identify the slice information, and correctly perform subsequent actions according to the slice information.

For example, for the above terminal B, the slice information sent by the network device is in the form of the single slice, so as to ensure that the terminal B may accurately identify the received slice information, and correctly perform subsequent actions according to the identified slice information. Since the terminal A supports both the slice group and the single slice, the slice information sent by the network device may be in the form of the single slice or the slice group.

It should be noted that the capability indication information sent by the terminal to the network device is only auxiliary information for the network device, that is, the capability indication information cannot determine actions of the network device, but is only used as a reference for the network device to perform the actions.

In other words, for the above terminal B, the network device takes into account the capability indication information and sends the slice information to the terminal B in the form of the single slice. If the network device may also not take into account the capability indication information, the slice information sent to the terminal B may be in the form of the single slice or the slice group.

In an embodiment, when the network device is a base station, after receiving the capability indication information from the terminal, the capability indication information may be sent to a neighboring base station (for example, via an Xn interface) so that the neighboring base station may use the capability indication information from the terminal as the auxiliary information to determine the form of the slice information indicated to the terminal.

In an embodiment, when the terminal switches from a source base station to a target base station, the terminal may carry the capability indication information in a switching request message and send the same to the target base station, so that the target base station may use the capability indication information from the terminal as the auxiliary information to determine the form of the slice information indicated to the terminal.

In an embodiment, the terminal may perform various actions based on the slice information, including but not limited to a cell reselection (for example, in an idle state or an inactive state), a random access, etc. Accordingly, the slice information sent by the network device to the terminal may also include slice information related to the cell reselection and slice information related to the random access.

The capability indication information of the disclosure is exemplarily described below from the two aspects of cell reselection and random access.

In an embodiment, there are mainly two ways for the network device to send slice information to the terminal, in which one way is broadcasting, such as carrying the slice information in a SIB, and the other way is unicasting, such as carrying the slice information in a RRC message, further carrying the slice information in an RRC Release message.

When the slice information is carried in the RRC Release message, the network device has established a communication connection with the terminal before sending the RRC Release message to the terminal. Therefore, the network device may receive the capability indication information reported by the terminal, and determine whether the terminal receives the slice information in the form of supporting the slice group.

For example, the network device needs to send slice information for cell reselection to the terminal, such as a cell frequency priority associated with a slice. When the network device determines that the terminal supports a slice group according to the capability indication information, the network device may select to send a cell frequency priority associated with the slice group to the terminal. The capability indication information may also indicate a single slice supported by the terminal, and the network device may select to send a cell frequency priority associated with the single slice to the terminal. The capability indication information may also indicate that neither the slice group nor the single slice is supported by the terminal, and the network device may select to send a cell frequency priority in a legacy form to the terminal, that is, the cell frequency priority is not associated with the slice.

In an embodiment, the capability indication information reported by the terminal to the network device indicates whether the terminal supports the slice group, in which there are mainly two forms of capability indication information. One form is that the capability indication information directly indicates whether the terminal supports the slice group, and the other form is that the capability indication information indicates indirect information, for example, it does not directly indicate whether the terminal supports the slice group, but indicates whether the terminal supports performing some operations based on the slice group information. The following embodiments mainly provide examples for describing the two forms of capability indication information.

In an embodiment, the capability indication information includes first indication information, and the first indication information indicates whether the terminal supports a cell reselection based on slice group information; and
determining, according to the capability indication information, whether the terminal supports the slice group includes:
determining, according to the first indication information, whether the terminal supports a cell reselection based on slice group information.

In this embodiment, the indication information indicates whether the terminal supports the slice group, which may be that the first indication information is used to indicate whether the terminal supports the cell reselection based on the slice group information.

When it is determined that the terminal supports the cell reselection based on the slice group information, the network device may select to send information to the cell reselection related to the terminal in the form of the slice group. When it is determined that the terminal does not support the cell reselection based on the slice group information, the network device may select to send information related to the cell reselection to the terminal in the form of the single slice. The information related to the cell reselection includes but is not limited to a cell frequency priority.

For example, the first indication information may be in the form of:
It should be noted that in all embodiments of the disclosure, sending information to the terminal in the form of the slice group includes sending information associated with an ID of a slice group to the terminal, and sending information to the terminal in the form of the single slice includes sending information associated with an ID of a single slice to the terminal, for example, information associated with S-NSSAI.

In an embodiment, the capability indication information includes second indication information, and the second indication information indicates whether the terminal supports a cell reselection based on single slice information; and
determining, according to the capability indication information, whether the terminal supports the slice group includes:
determining, according to the second indication information, whether the terminal supports the cell reselection based on the single slice information.

In this embodiment, the indication information indicates whether the terminal supports the slice group, which may be that the second indication information is used to indicate whether the terminal supports the cell reselection based on the single slice information. It may be agreed that when the capability indication information indicates that the cell reselection based on the single slice information is supported, the cell reselection based on the slice group information is not supported by default; and when the capability indication information indicates that the cell reselection based on the single slice information is not supported, the cell reselection based on the slice group information is supported by default.

When it is determined that the terminal supports the cell reselection based on the single slice information, the network device may select to send information related to the cell reselection to the terminal in the form of the single slice. When it is determined that the terminal does not support cell reselection based on a single slice information, the network device may select to send information related to the cell reselection to the terminal in the form of the slice group. The information related to the cell reselection includes but is not limited to the cell frequency priority.

In an embodiment, the capability indication information includes third indication information, and the third indication information indicates whether the terminal supports slice group information; and
determining, according to the capability indication information, whether the terminal supports slice group includes:
determining, according to the third indication information, whether the terminal supports the slice group information.

In this embodiment, the indication information indicates whether the terminal supports the slice group, which may be that the third indication information is used to directly indicate whether the terminal supports the slice group information.

When it is determined that the terminal supports the slice group information, the network device may select to send slice information to the terminal in the form of the slice group. When it is determined that the terminal does not support the slice group information, the network device may select to send slice information to the terminal in the form of the single slice.

In an embodiment, the capability indication information includes fourth indication information, where the fourth indication information indicates whether the terminal supports single slice information; and
determining, according to the capability indication information, whether the terminal supports slice group includes:
determining, according to the fourth indication information, whether the terminal supports the single slice information.

In this embodiment, the indication information indicates whether the terminal supports slice group, which may be that the fourth indication information is used to directly indicate whether the terminal supports the single slice information. It may be agreed that when the capability indication information indicates that the single slice information is supported, the slice group information is not supported by default; and when the capability indication information indicates that the single slice information is not supported, the slice group information is supported by default.

When it is determined that the terminal supports the single slice information, the network device may select to send slice information to the terminal in the form of the single slice. When it is determined that the terminal does not support the single slice information, the network device may select to send slice information to the terminal in the form of the slice group.

In an embodiment, the capability indication information includes slice support indication information, and the slice support indication information indicates whether the terminal supports a cell reselection based on slice information.

Since the slice support indication information can only indicate a support state of the terminal for the slice information, but cannot specifically indicate whether the slice group or single slice is supported, in an embodiment, based on the fact that the indication information includes the slice support indication information, the indication information may be set to include at least one of the above first indication information, second indication information, third indication information and fourth indication information so as to further indicate whether the terminal specifically supports the slice group or the single slice, thus ensuring the accuracy of the indication.

Taking as an example that the network device sends information related to the cell reselection to the terminal:

In a case where the slice support indication information indicates that the terminal supports the slice information, if the network device determines that the terminal supports the slice group information, the information related to the cell reselection sent to the terminal may include a slice group ID and a dedicated frequency priority associated with the slice group ID;

In the case where the slice support indication information indicates that the terminal supports slice information, if the network device determines that the terminal does not support the slice group information, the information related to the cell reselection sent to the terminal may include a single slice ID and a dedicated frequency priority associated with the single slice ID;

In a case where the slice support indication information indicates that the terminal does not support slice information, if the network device determines that the terminal supports the slice group information, the frequency priority may be carried in the SIB and sent to the terminal;

In the case where the slice support indication information indicates that the terminal does not support slice information, if the network device determines that the terminal does not support the slice group information, the information related to the cell reselection sent to the terminal may include sending a legacy dedicated frequency priority.

In the case where the slice support indication information indicates that the terminal supports slice information, if the network device has not determined whether the terminal supports the slice group information, it may be determined by default that the terminal supports the slice group information, and the information related to the cell reselection sent to the terminal may include a slice group ID and a dedicated frequency priority associated with the slice group ID, or it may be determined by default that the terminal supports the single slice information, and the information related to the cell reselection sent to the terminal may include a single slice ID and a dedicated frequency priority associated with the single slice ID.

In an embodiment, the indication information may not include the slice support indication information, but only include the first indication information or the second indication information. Since the first indication information or the second indication information has already indicated the support state for the slice group information, there is no need to indicate both the support state for the slice information and the support state for the slice group information respectively through two levels of indication information, which helps to reduce the complexity of the indication.

Taking as an example that the network device sends information related to the cell reselection to the terminal:
When the network device determines, according to the first indication information, that the terminal supports the slice group information, the information related to the cell reselection sent to the terminal may include a slice group ID and a dedicated frequency priority associated with the slice group ID;
When the network device determines, according to the first indication information, that the terminal does not support the slice group information, the information related to the cell reselection sent to the terminal may include a legacy dedicated frequency priority, or the information related to the cell reselection sent to the terminal may include a single slice ID and a dedicated frequency priority associated with the single slice ID;
When the network device determines, according to the second indication information, that the terminal supports the slice group information, the information related to the cell reselection sent to the terminal may include a single slice ID and a dedicated frequency priority associated with the single slice ID;
When the network device determines that the terminal does not support the slice group information based on the second indication information, the information related to the cell reselection sent to the terminal may include a legacy dedicated frequency priority, or the information related to the cell reselection sent to the terminal may include a single slice ID and a dedicated frequency priority associated with the single slice ID.

In an embodiment, the capability indication information includes fifth indication information, and the fifth indication information indicates whether the terminal supports a RACH based on slice group information; and
determining, according to the capability indication information, whether the terminal supports slice group comprises:
determining, according to the fifth indication information, whether the terminal supports the RACH based on the slice group information.

In this embodiment, the indication information indicates whether the terminal supports slice group, which may be that the fifth indication information is used to indicate whether the terminal supports the RACH based on the slice group information.

When it is determined that the terminal supports the RACH based on the slice group information, the network device may select to send information related to the RACH to the terminal in the form of the slice group. When it is determined that the terminal does not support the RACH based on the slice group information, the network device may select to send information related to the RACH to the terminal in the form of the single slice. The information related to the RACH includes but is not limited to RACH resource partition and RA prioritization parameters.

In an embodiment, the capability indication information includes sixth indication information, where the sixth indication information indicates whether the terminal supports a RACH resource partition based on slice group information; and
determining, according to the capability indication information, whether the terminal supports slice group includes:
determining, according to the sixth indication information, whether the terminal supports the RACH resource partition based on the slice group information.

In this embodiment, the indication information indicates whether the terminal supports the slice group, which may be that the sixth indication information is used to indicate whether the terminal supports the RACH resource partition based on the slice group information.

When it is determined that the terminal supports the RACH resource partition based on the slice group information, the network device may select to configure the RACH resource partition to the terminal in the form of the slice group. When it is determined that the terminal does not support the RACH resource partition based on the slice group information, the network device may select to configure the RACH resource partition to the terminal in the form of the single slice.

In an embodiment, the capability indication information includes seventh indication information, and the seventh indication information indicates whether the terminal supports RACH prioritization parameters based on slice group information.
determining, according to the capability indication information, whether the terminal supports slice group includes:
determining, according to the seventh indication information, whether the terminal supports the RACH prioritization parameters based on the slice group information.

In this embodiment, the indication information indicates whether the terminal supports the slice group, which may be that the seventh indication information is used to indicate whether the terminal supports the RACH prioritization parameters based on the slice group information.

When it is determined that the terminal supports the RACH prioritization parameters based on the slice group information, the network device may select to configure the RACH prioritization parameters to the terminal in the form of the slice group. When it is determined that the terminal does not support the RACH prioritization parameters based on the slice group information, the network device may select to configure the RACH prioritization parameters to the terminal in the form of the single slice.

In an embodiment, the capability indication information includes eighth indication information, and the eighth indication information indicates whether the terminal supports a RACH based on single slice information; and
determining, according to the capability indication information, whether the terminal supports slice group includes:
determining, according to the eighth indication information, whether the terminal supports the RACH based on the single slice information.

In this embodiment, the indication information indicates whether the terminal supports the slice group, which may be that the eighth indication information is used to indicate whether the terminal supports the RACH based on the single slice information. It may be agreed that when the capability indication information indicates that the RACH based on the single slice information is supported, the RACH based on the slice group information is not supported by default; and when the capability indication information indicates that the RACH based on the single slice information is not supported, the RACH based on the slice group information is supported by default.

When it is determined that the terminal supports the RACH based on the single slice information, the network device may select to send information related to the RACH to the terminal in the form of the single slice. When it is determined that the terminal does not support RACH based on a single slice information, the network device may select to send information related to the RACH to the terminal in the form of the slice group.

In an embodiment, the capability indication information includes ninth indication information, and the ninth indication information indicates whether the terminal supports a RACH resource partition based on single slice information; and
determining, according to the capability indication information, whether the terminal supports slice group includes:
determining, according to the ninth indication information, whether the terminal supports the RACH resource partition based on the single slice information.

In this embodiment, the indication information indicates whether the terminal supports the slice group, which may be that the ninth indication information is used to indicate whether the terminal supports the RACH resource partition based on the single slice information. It may be agreed that when the capability indication information indicates that the RACH resource partition based on the single slice information is supported, a RACH resource partition based on slice group information is not supported by default; and when the capability indication information indicates that the RACH resource partition based on the single slice information is not supported, the RACH resource partition based on the slice group information is supported by default.

When it is determined that the terminal supports the RACH resource partition based on the single slice information, the network device may select to configure the RACH resource partition to the terminal in the form of the single slice. When it is determined that the terminal does not support the RACH resource partition based on the single slice information, the network device may select to configure the RACH resource partition to the terminal in the form of the slice group.

In an embodiment, the capability indication information includes tenth indication information, where the tenth indication information indicates whether the terminal supports RACH prioritization parameters based on single slice information; and
determining, according to the capability indication information, whether the terminal supports slice group includes:
determining, according to the tenth indication information, whether the terminal supports the RACH prioritization parameters based on the single slice information.

In this embodiment, the indication information indicates whether the terminal supports the slice group, which may be that the tenth indication information is used to indicate whether the terminal supports the RACH prioritization parameters based on the single slice information. It may be agreed that when the capability indication information indicates that the RACH prioritization parameters based on the single slice information are supported, RACH prioritization parameters based on slice group information are not supported by default; and when the capability indication information indicates that the RACH prioritization parameters based on the single slice information are not supported, the RACH prioritization parameters based on the slice group information are supported by default.

When it is determined that the terminal supports the RACH prioritization parameters based on the single slice information, the network device may select to configure the RACH prioritization parameters to the terminal in the form of the single slice. When it is determined that the terminal does not support the RACH prioritization parameters based on the single slice information, the network device may select to configure the RACH prioritization parameters to the terminal in the form of the slice group.

In an embodiment, based on the fact that the indication information includes the above slice support indication information, the indication information may be set to include at least one of the above fifth indication information, sixth indication information, seventh indication information, eighth indication information, ninth indication information, and tenth indication information to further indicate whether the terminal specifically supports the slice group or the single slice, thus ensuring the accuracy of the indication.

Taking an example that the network device sends information related to the RACH to the terminal:
In the case where the slice support indication information indicates that the terminal supports the slice information, if the network device determines that the terminal supports the slice group information, the information related to the RACH sent to the terminal may include a slice group ID and a RACH configuration associated with the slice group ID;
In the case where the slice support indication information indicates that the terminal supports the slice information, if the network device determines that the terminal does not support the slice group information, the information related to the RACH sent to the terminal may include a single slice ID and a RACH configuration associated with the single slice ID;
In the case where the slice support indication information indicates that the terminal does not support the slice information, if the network device determines that the terminal supports the slice group information, the RACH configuration may be carried in the SIB and sent to the terminal;
In the case where the slice support indication information indicates that the terminal does not support the slice information, if the network device determines that the terminal does not support the slice group information, the information related to the RACH sent to the terminal may include sending a legacy RACH configuration.

In the case where the slice support indication information indicates that the terminal supports the slice information, if the network device has not determined whether the terminal supports the slice group information, it may be determined by default that the terminal supports the slice group information, and the information related to the RACH sent to the terminal may include a slice group ID and a RACH configuration associated with the slice group ID, or it may be determined by default that the terminal supports the single slice information, and the information related to the RACH sent to the terminal may include a single slice ID and a RACH configuration associated with the single slice ID.

In an embodiment, the indication information may not include the slice support indication information, but only include the first indication information or the second indication information. Since the first indication information or the second indication information has already indicated the support state for the slice group information, there is no need to indicate both the support state for the slice information and the support state for the slice group information respectively through two levels of indication information, which helps to reduce the complexity of the indication.

Taking as an example that the network device sends information related to the RACH to the terminal:
When the network device determines that the terminal supports the slice group information, the information related to the RACH sent to the terminal may include a slice group ID and a RACH configuration associated with the slice group ID;
When the network device determines that the terminal does not support the slice group information, the information related to the RACH sent to the terminal may include a legacy RACH configuration;
When the network device determines that the terminal supports the slice group information, the information related to the RACH sent to the terminal may include a slice group ID and a RACH configuration associated with a single slice ID;
When the network device determines that the terminal does not support the slice group information, the information related to the RACH sent to the terminal may include a legacy RACH configuration.

Corresponding to the aforementioned embodiments of the method for capability indication and the method for capability determination, the disclosure also provides embodiments of an apparatus for capability indication and an apparatus for capability determination.

FIG. 3 is a schematic block diagram illustrating an apparatus for capability indication according to an embodiment of the disclosure. The apparatus for capability indication shown in this embodiment may be applicable to a terminal, which includes but is not limited to a mobile phone, a tablet computer, a wearable device, a sensor, an Internet of Things device and other communication device. The terminal may communicate with a network device, and the network device includes but is not limited to a network device in 4G, 5G, 6G and other communication systems, such as a base station, a core network device and other communication device.

As shown in FIG. 3, the apparatus for capability indication includes a sending module 301.

The sending module 301 is configured to send capability indication information to the network device, in which the capability indication information indicates whether the terminal supports a slice group.

In an embodiment, the capability indication information includes first indication information, and the first indication information indicates whether the terminal supports a cell reselection based on slice group information.

In an embodiment, the capability indication information includes second indication information, and the second indication information indicates whether the terminal supports a cell reselection based on single slice information.

In an embodiment, the capability indication information includes third indication information, and the third indication information indicates whether the terminal supports slice group information.

In an embodiment, the capability indication information includes fourth indication information, and the fourth indication information indicates whether the terminal supports single slice information.

In an embodiment, the capability indication information includes fifth indication information, and the fifth indication information indicates whether the terminal supports a RACH based on slice group information.

In an embodiment, the capability indication information includes sixth indication information, and the sixth indication information indicates whether the terminal supports a RACH resource partition based on slice group information.

In an embodiment, the capability indication information includes seventh indication information, and the seventh indication information indicates whether the terminal supports RACH prioritization parameters based on slice group information.

In an embodiment, the capability indication information includes eighth indication information, and the eighth indication information indicates whether the terminal supports a RACH based on single slice information.

In an embodiment, the capability indication information includes ninth indication information, and the ninth indication information indicates whether the terminal supports a RACH resource partition based on single slice information.

In an embodiment, the capability indication information includes tenth indication information, and the tenth indication information indicates whether the terminal supports RACH prioritization parameters based on single slice information.

FIG. 4 is a schematic block diagram illustrating an apparatus for capability determination according to an embodiment of the disclosure. The apparatus for capability determination shown in this embodiment may be applicable to a network device, and the network device can communicate with a terminal. The network device includes but is not limited to a base station in a communication system, such as a 4G base station, a 5G base station, and a 6G base station. The terminal includes but is not limited to a mobile phone, a tablet computer, a wearable device, a sensor, an Internet of Things device (such as NB-IoT, MTC, eMTC) and other communication device.

As shown in FIG. 4, the apparatus for capability determination may include a receiving module 401 and a processing module 402.

The receiving module 401 is configured to receive capability indication information from the terminal.

The processing module 402 is configured to determine whether the terminal supports a slice group based on the capability indication information.

In an embodiment, the capability indication information includes first indication information, and the first indication information indicates whether the terminal supports a cell reselection based on slice group information; and

the processing module is configured to determine, according to the first indication information, whether the terminal supports the cell reselection based on the slice group information.

In an embodiment, the capability indication information includes second indication information, and the second indication information indicates whether the terminal supports a cell reselection based on single slice information; and
the processing module is configured to determine, according to the second indication information, whether the terminal supports the cell reselection based on the single slice information.

In an embodiment, the capability indication information includes third indication information, and the third indication information indicates whether the terminal supports slice group information; and
the processing module is configured to determine, according to the third indication information, whether the terminal supports the slice group information.

In an embodiment, the capability indication information includes fourth indication information, and the fourth indication information indicates whether the terminal supports single slice information; and
the processing module is configured to determine, according to the fourth indication information, whether the terminal supports the single slice information.

In an embodiment, the capability indication information includes fifth indication information, and the fifth indication information indicates whether the terminal supports a RACH based on slice group information; and
the processing module is configured to determine, according to the fifth indication information, whether the terminal supports the RACH based on the slice group information.

In an embodiment, the capability indication information includes sixth indication information, and the sixth indication information indicates whether the terminal supports a RACH resource partition based on slice group information; and
the processing module is configured to determine, according to the sixth indication information, whether the terminal supports the RACH resource partition based on slice group information.

In an embodiment, the capability indication information includes seventh indication information, and the seventh indication information indicates whether the terminal supports RACH prioritization parameters based on slice group information; and
the processing module is configured to determine, according to the seventh indication information, whether the terminal supports the RACH prioritization parameters based on the slice group information.

In an embodiment, the capability indication information includes eighth indication information, and the eighth indication information indicates whether the terminal supports a RACH based on single slice information; and
the processing module is configured to determine, according to the eighth indication information, whether the terminal supports the RACH based on the single slice information.

In an embodiment, the capability indication information includes ninth indication information, and the ninth indication information indicates whether the terminal supports a RACH resource partition based on single slice information; and
the processing module is configured to determine, according to the ninth indication information, whether the terminal supports the RACH resource partition based on the single slice information.

In an embodiment, the capability indication information includes tenth indication information, and the tenth indication information indicates whether the terminal supports RACH prioritization parameters based on single slice information; and
the processing module is configured to determine, according to the tenth indication information, whether the terminal supports the RACH prioritization parameters based on the single slice information.

Regarding the apparatus in the above embodiments, the specific manner in which each module performs the operation has been described in detail in the embodiments of the relevant methods, which will not be elaborated here.

As for the apparatus embodiments, since they basically correspond to the method embodiments, the relevant parts may refer to the partial description of the method embodiments. The apparatus embodiments described above are merely illustrative, in which the modules described as separate components may or may not be physically separated, and the components displayed as modules may or may not be physical modules, that is, they may be located in one place, or may be distributed over a plurality of network modules. Some or all of the modules may be selected according to actual needs to achieve the purpose of the solution in this embodiment. A person skilled in the art may understand and implement the present invention without any creative works.

An embodiment of the disclosure further provides a communication device, including: a processor, and a memory for storing a computer program. When the computer program is performed by the processor, the method for capability indication described in any of the above embodiments is implemented.

An embodiment of the disclosure further provides a communication device, including: a processor, and a memory for storing a computer program. When the computer program is performed by the processor, the method for capability determination described in any of the above embodiments is implemented.

An embodiment of the disclosure further provides a computer-readable storage medium for storing a computer program. When the computer program is performed by a processor, the steps in the method for capability indication described in any of the above embodiments are implemented.

An embodiment of the disclosure further provides a computer-readable storage medium for storing a computer program. When the computer program is performed by a processor, the steps in the method for capability determination described in any of the above embodiments are implemented.

As shown in FIG. 5, FIG. 5 is a schematic block diagram illustrating a device 500 for capability determination according to an embodiment of the disclosure. The device 500 may be provided as a base station. 5 , the device 500 includes a processing component 522, a wireless transmission/reception component 524, an antenna component 526, and a signal processing portion specific to a wireless interface. The processing component 522 may further include one or more processors. One of the processors in the processing component 522 may be configured to implement the method for capability determination described in any of the above embodiments.

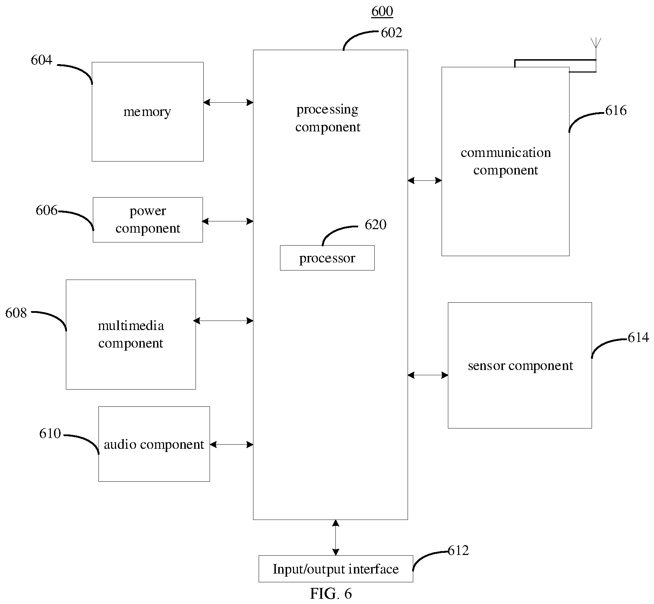

FIG. 6 is a schematic block diagram illustrating a device 600 for capability indication according to an embodiment of the disclosure. For example, the device 600 may be a mobile phone, a computer, a digital broadcast terminal, a messaging device, a game console, a tablet device, a medical device, a fitness device, a personal digital assistant, etc.

Referring to FIG. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 generally controls overall operations of the device 600, such as those associated with display, telephone calls, data communications, camera operations, and recording operations. The processing component 602 may include one or more processors 620 to execute instructions to perform all or some of the steps of the above method for capability determination. Moreover, the processing component 602 may include one or more modules that facilitate interactions between the processing component 602 and other components. For example, the processing component 602 may include a multimedia module to facilitate interactions between the multimedia component 608 and the processing component 602.

The memory 604 is configured to store various types of data to support operations of the device 600. Examples of such data include instructions for any application or method operating on the device 600, contact data, phonebook data, messages, pictures, videos, and the like. The memory 604 may be implemented by any type of volatile or nonvolatile storage device or their combination, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen that provides an output interface between the device 600 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation. In some embodiments, the multimedia component 608 includes a front-facing camera and/or a rear-facing camera. When the device 600 is in an operation mode, such as a shooting mode or a video mode, the front camera and/or the rear camera may receive external multimedia data. Each of the front-facing camera and the rear-facing camera may be a fixed optical lens system or may have variable focal length and optical zoom capability.

The audio component 610 is configured to output and/or input audio signals. For example, the audio component 610 includes a microphone (MIC) configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 also includes a speaker for outputting audio signals.

The I/O interface 612 provides an interface between the processing component 602 and a peripheral interface module, which may be a keyboard, a click wheel, a button, etc. The button may include, but are not limited to: a home button, volume buttons, a start button, and a lock button.

The sensor component 614 includes one or more sensors for providing state assessment of various aspects for the device 600. For example, the sensor component 614 may detect an open/closed state of the device 600, relative positioning of components, such as the display and keypad of the device 600, sensor component 614 can also detect position changes of device 600 or a component of the device 600, a presence or absence of user contact with the device 600, an orientation or an acceleration/deceleration of the device 600 and temperature changes of the device 600. The sensor component 614 may include a proximity sensor configured to detect a presence of a nearby object without any physical contact. The sensor component 614 may also include a light sensor, such as a CMOS or CCD image sensor, for use in imaging applications. In some embodiments, the sensor component 614 may also include an acceleration sensor, a gyroscope sensor, a magnetic sensor, a pressure sensor, or a temperature sensor.

The communication component 616 is configured to facilitate wired or wireless communication between the device 600 and other devices. The device 600 may access a wireless network based on a communication standard, such as WiFi, 2G, 3G, 4G LTE, 5G NR, or their combination. In an exemplary embodiment, the communication component 616 receives a broadcast signal or broadcast-related information from an external broadcast management system via a broadcast channel. In an exemplary embodiment, the communication component 616 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an exemplary embodiment, the device 600 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned method for capability determination.

In an exemplary embodiment, a non-transitory computer-readable storage medium including instructions is also provided, such as a memory 604 including instructions, and the above instructions may be performed by the processor 620 of the device 600 to perform the above method for capability determination. For example, the non-transitory computer-readable storage medium may be a ROM, a random access memory (RAM), a CD-ROM, a magnetic tape, a floppy disk, an optical data storage device, and the like.

Other embodiments of the disclosure will be apparent to those skilled in the art from consideration of the specification and practice of the disclosure disclosed herein. The disclosure is intended to cover any modifications, uses or adaptations of the disclosure, which follow the general principles of the disclosure and include common knowledge or conventional technical means in the technical field not disclosed in the disclosure. It is intended that the specification and examples be considered as exemplary only, with a true scope and spirit of the disclosure being indicated by the following claims.

It should be understood that the disclosure is not limited to the exact construction that has been described above and shown in the drawings, and that various modifications and changes may be made without departing from the scope of the disclosure. The scope of the disclosure is limited only by the following claims.

It should be noted that, in this document, relational terms such as first and second, etc. are merely used to distinguish one entity or operation from another entity or operation, and do not necessarily require or imply any actual relationship or order between these entities or operations. The terms "includes," "including," or any other variations are intended to cover non-exclusive inclusion such that a process, method, article, or apparatus that includes a list of elements includes not only those elements but also other elements not expressly listed, or also includes elements inherent to such process, method, article, or apparatus. Without more constraints, an element defined by the phrase "including a..." does not exclude the existence of other identical elements in the process, method, article or apparatus including the element.

The method and device provided in the embodiments of the disclosure are introduced in detail above. Specific examples are used herein to illustrate the principles and implementation methods of the disclosure. The description of the above embodiments is only used to help understand the method of the disclosure and its main concept. At the same time, for those skilled in the art, according to the concept of the disclosure, there will be changes in the specific implementations and application scope. In summary, the content of this specification should not be understood as a limitation on the disclosure.

## Claims

1. A method for capability indication, performed by a terminal, the method comprising:
sending capability indication information to a network device, wherein the capability indication information indicates whether the terminal supports a slice group.

2. The method according to claim 1, wherein the capability indication information comprises first indication information, and the first indication information indicates whether the terminal supports a cell reselection based on slice group information.

3. The method according to claim 1, wherein the capability indication information comprises second indication information, and the second indication information indicates whether the terminal supports a cell reselection based on single slice information.

4. The method according to claim 1, wherein the capability indication information comprises third indication information, and the third indication information indicates whether the terminal supports slice group information.

5. The method according to claim 1, wherein the capability indication information comprises fourth indication information, and the fourth indication information indicates whether the terminal supports single slice information.

6. The method according to claim 1, wherein the capability indication information comprises fifth indication information, and the fifth indication information indicates whether the terminal supports a random access channel based on slice group information.

7. The method according to claim 1, wherein the capability indication information comprises sixth indication information, and the sixth indication information indicates whether the terminal supports a random access channel resource partition based on slice group information.

8. The method according to claim 1, wherein the capability indication information comprises seventh indication information, and the seventh indication information indicates whether the terminal supports random access channel prioritization parameters based on slice group information.

9. The method according to claim 1, wherein the capability indication information comprises eighth indication information, and the eighth indication information indicates whether the terminal supports a random access channel based on single slice information.

10. The method according to claim 1, wherein the capability indication information comprises ninth indication information, and the ninth indication information indicates whether the terminal supports a random access channel resource partition based on single slice information.

11. The method according to claim 1, wherein the capability indication information comprises tenth indication information, and the tenth indication information indicates whether the terminal supports random access channel prioritization parameters based on single slice information.

12. A method for capability determination, performed by a network device, the method comprises:
receiving capability indication information from a terminal; and
determining, according to the capability indication information, whether the terminal supports a slice group.

13. The method according to claim 12, wherein the capability indication information comprises first indication information, and the first indication information indicates whether the terminal supports a cell reselection based on slice group information;
wherein determining, according to the capability indication information, whether the terminal supports the slice group comprises:
determining, according to the first indication information, whether the terminal supports the cell reselection based on the slice group information.

14. The method according to claim 12, wherein the capability indication information comprises second indication information, and the second indication information indicates whether the terminal supports a cell reselection based on single slice information;
wherein determining, according to the capability indication information, whether the terminal supports the slice group comprises:
determining, according to the second indication information, whether the terminal supports the cell reselection based on the single slice information.

15. The method according to claim 12, wherein the capability indication information comprises third indication information, and the third indication information indicates whether the terminal supports slice group information;
wherein determining, according to the capability indication information, whether the terminal supports the slice group comprises:
determining, according to the third indication information, whether the terminal supports the slice group information.

16. The method according to claim 12, wherein the capability indication information comprises fourth indication information, and the fourth indication information indicates whether the terminal supports single slice information;
wherein determining, according to the capability indication information, whether the terminal supports the slice group comprises:
determining, according to the fourth indication information, whether the terminal supports the single slice information.

17. The method according to claim 12, wherein the capability indication information comprises fifth indication information, and the fifth indication information indicates whether the terminal supports a random access channel based on slice group information;
wherein determining, according to the capability indication information, whether the terminal supports the slice group comprises:
determining, according to the fifth indication information, whether the terminal supports the random access channel based on the slice group information.

18. The method according to claim 12, wherein the capability indication information comprises sixth indication information, and the sixth indication information indicates whether the terminal supports a random access channel resource partition based on slice group information;
wherein determining, according to the capability indication information, whether the terminal supports the slice group comprises:
determining, according to the sixth indication information, whether the terminal supports the random access channel resource partition based on slice group information.

19. The method according to claim 12, wherein the capability indication information comprises seventh indication information, and the seventh indication information indicates whether the terminal supports random access channel prioritization parameters based on slice group information;
wherein determining, according to the capability indication information, whether the terminal supports the slice group comprises:
determining, according to the seventh indication information, whether the terminal supports the random access channel prioritization parameters based on the slice group information.

20. The method according to claim 12, wherein the capability indication information comprises eighth indication information, and the eighth indication information indicates whether the terminal supports a random access channel based on single slice information;
wherein determining, according to the capability indication information, whether the terminal supports the slice group comprises:
determining, according to the eighth indication information, whether the terminal supports the random access channel based on the single slice information.

21. The method according to claim 12, wherein the capability indication information comprises ninth indication information, and the ninth indication information indicates whether the terminal supports a random access channel resource partition based on single slice information;
wherein determining, according to the capability indication information, whether the terminal supports the slice group comprises:
determining, according to the ninth indication information, whether the terminal supports the random access channel resource partition based on the single slice information.

22. The method according to claim 12, wherein the capability indication information comprises tenth indication information, and the tenth indication information indicates whether the terminal supports random access channel prioritization parameters based on single slice information;
wherein determining, according to the capability indication information, whether the terminal supports the slice group comprises:
determining, according to the tenth indication information, whether the terminal supports the random access channel prioritization parameters based on the single slice information.

23. An apparatus for capability indication, comprising:
a sending module, configured to send capability indication information to a network device, wherein the capability indication information indicates whether the terminal supports a slice group.

24. An apparatus for capability determination, comprising:
a receiving module, configured to receive capability indication information from a terminal; and
a processing module, configured to determine whether the terminal supports a slice group based on the capability indication information.

25. A communication device, comprising:
a processor; and
a memory for storing a computer program;
wherein when the computer program is executed by the processor, the method for capability indication according to any one of claims 1 to 11 is implemented.

26. A communication device, comprising:
a processor; and
a memory for storing a computer program;
wherein when the computer program is executed by the processor, the method for capability indication according to any one of claims 12 to 23 is implemented.

27. A computer-readable storage medium for storing a computer program, wherein when the computer program is executed by a processor, steps in the method for capability indication according to any one of claims 1 to 11 are implemented.

28. A computer-readable storage medium for storing a computer program, wherein when the computer program is executed by a processor, steps in the method for capability determination according to any one of claims 12 to 23 are implemented.
